# EUROPÄISCHE PATENTSCHRIFT

(11) **EP 3 424 731 B1**
(45) Veröffentlichungstag und Bekanntmachung des Hinweises auf die Patenterteilung: **28.12.2022**
(21) Anmeldenummer: 18181085.4
(22) Anmeldetag: 02.07.2018
(51) Int. Cl.: B41J 3/28, B25J 9/00, F16M 11/04, F16M 11/12, B23K 26/00, B23K 26/08, B42D 25/435, B41J 2/44, B42D 25/41, B23K 26/04, B23K 26/352, B23K 101/36, B23K 103/00, B41J 3/407, B23K 101/18

(54) **VORRICHTUNG UND VERFAHREN ZUR POSITIONIERUNG EINES DOKUMENTENKÖRPERS SOWIE VORRICHTUNG UND VERFAHREN ZUR HERSTELLUNG EINES DOKUMENTENKÖRPERS**
DEVICE AND METHOD FOR POSITIONING A DOCUMENT BODY AND DEVICE AND METHOD FOR PRODUCING A DOCUMENT BODY
DISPOSITIF ET PROCÉDÉ DE POSITIONNEMENT D'UN CORPS DE DOCUMENT ET DISPOSITIF ET PROCÉDÉ DE FABRICATION D'UN CORPS DE DOCUMENT

(30) Priorität: 03.07.2017 DE 102017211254
(43) Veröffentlichungstag der Anmeldung: 09.01.2019
(73) Patentinhaber: Bundesdruckerei GmbH, 10969 Berlin (DE)
(72) Erfinder: Bielesch, Ulrich, 56132 Frücht (DE); Hirsch, Robert, 83620 Vagen (DE); Gödecke, Alexander, 93170 Bernhardswald (DE); Kramer, Thomas, 80805 München (DE); Mauderer, Michael, 81825 München (DE); Kirschbauer, Josef, 93476 Blaibach (DE); Tschorn, Stefan, 16775 Gransee (DE)
(74) Vertreter: Patentanwälte Bressel und Partner mbB

(56) Entgegenhaltungen:
- WO-A1-2015/099370
- WO-A1-2015/144749
- CN-A- 103 895 009
- CN-A- 104 889 978
- CN-A- 106 641 634
- CN-U- 203 045 724
- DE-A1-102010 010 071
- DE-C2- 19 938 602
- JP-A- 2000 334 594
- KR-A- 20100 038 839
- US-A1- 2011 149 405
- US-B2- 8 956 068

## Beschreibung

Die Erfindung betrifft eine Vorrichtung und ein Verfahren zur Positionierung eines Dokumentenkörpers. Weiter betrifft die Erfindung eine Vorrichtung und ein Verfahren zur Herstellung eines Dokumentenkörpers, insbesondere eines Wert- und/oder Sicherheitsdokuments.

Die Herstellung von Dokumenten, insbesondere von Wert- und/oder Sicherheitsdokumenten, erfolgt in der Regel in mehreren Herstellungs- oder Prozessschritten. Ein Herstellungsschritt kann beispielsweise das Übertragen von Informationen auf eine RFID-Einrichtung im Dokumentenkörper sein. Ein weiterer Herstellungsschritt kann eine Laserbeschriftung des Dokumentkörpers sein. Für die und/oder während der Durchführung eines Herstellungsschritts kann es erforderlich sein, ein Dokument sicher zu halten. Weiter kann es erforderlich sein, eine Position und/oder eine Orientierung eines gehaltenen Dokuments zu verändern, wobei in möglichst vielen Lagen ein sicherer Haltezustand für das Dokument herstellbar oder eine Freigabe eines gehaltenen Dokuments durchführbar sein sollte. Um Bauraum für eine entsprechende Halteeinrichtung zu reduzieren, ist es ebenfalls wünschenswert, die zur Halterung notwendigen Elemente platzsparend auszubilden und anzuordnen.

Die EP 2 733 099 B1 betrifft eine Laserindividualisierungsvorrichtung für Dokumente. In dem Dokument wird eine Dokumentenselektionseinrichtung beschrieben, welche mindestens zwei Sammeleinrichtungen umfasst, die auch als Magazine bezeichnet werden. Diese dienen zum Aufnehmen von Dokumenten. Weiter umfasst die Dokumentenselektionseinrichtung eine Aufnahmeöffnung zum Zuführen von vereinzelten Dokumenten und Dokumentenführungsmittel zum wahlweisen Leiten des zugeführten Dokuments zu einem der mindestens zwei Magazine. Weiter beschrieben wird ein Drehtisch.

Auch die EP 2 648 919 B1 beschreibt eine solche Laserindividualisierungsvorrichtung.

Die US 2011/149405 A1 offenbart ein Verfahren zum Herstellen eines Sicherheitsdokuments.

Die JP 2000 334 594 A offenbart eine Laserbearbeitungsvorrichtung.

Die DE 10 2010 010 071 A1 offenbart ein Verfahren zum Markieren von Wert- oder Sicherheitsdokumenten sowie eine Markierungsvorrichtung, die für ein dauerhaftes Markieren eines Wert- oder Sicherheitsdokuments mit Hilfe von Laserlicht ausgebildet sind.

Die WO 2015/144749 A1 offenbart eine Markierungsvorrichtung zur Markierung von Informationsträgern, mit einem Gehäuse, mit einer Markiereinheit, mit einem innerhalb des Gehäuses ausgebildeten Markierraum und mit einer Aufnahmevorrichtung zur Aufnahme mindestens eines Informationsträgers, wobei die Aufnahmevorrichtung zwischen einer Be- und Entladeposition außerhalb des Markierraums und einer Markierposition innerhalb des Markierraums verfahrbar ist.

Die CN 104 889 978 A offenbart einen asymmetrischen Parallel-Roboter-Mechanismus.

Die CN 103 895 009 A offenbart einen in drei Freiheitsgraden einstellbaren sphärischen Parallelmechanismus mit Kugelzentrum.

Die CN 106641 634 A offenbart einen Schwenk-Neige-Mechanismus und eine kompakte Plattform für eine hybride servostabile Drei-Freiheitsgrad-Nachführung.

Die KR 2010 003 8839 A offenbart eine Kippvorrichtung.

Die CN 203 045 724 U offenbart einen raumparallelen Mechanismus mit zwei Freiheitsgraden.

Die US 8,956,068 B2 offenbart bewegliche oder verstellbare Plattformen und Stative, insbesondere eine kinematische Plattform mit drei Beinen, die sechs Freiheitsgrade mit kontrolliertem Abbremsen an jedem Gelenk und hoher Beweglichkeit im Arbeitsbereich bietet.

Die WO 2015/009370 A1 offenbart eine Reparaturvorrichtung zur Beseitigung von Defekten an einer Anzeigetafel, die eine Krümmung auf ihrer Oberfläche aufweist.

Die DE 199 38 602 C2 offenbart ein Positioniersystem für Objekte, das einen Grundkörper, einen relativ zum Grundkörper beweglichen Objektträger und sechs Stützen mit veränderlicher Länge umfaßt, die den Objektträger gegen den Grundkörper abstützten und dabei kardanisch an der Grundplatte und am Objektträger angelenkt sind.

Bei der Herstellung wird häufig ein Laser zur Beschriftung einer Oberfläche eines Dokumentenkörpers verwendet. Selbstverständlich kann auch eine Lage unterhalb einer Deckschicht des Dokumentenkörpers, insbesondere einer transparenten Deckschicht, mit einem Laser beschriftet werden. Hierbei ist es wünschenswert, die zu bearbeitende Fläche mit Laserstrahlung unterschiedlichen Durchmessers zu beaufschlagen, um unterschiedliche Beschriftungseigenschaften erzielen zu können. Dies kann unter anderem durch die Einstellung verschiedener Arbeitsabstände und/oder eine Veränderung einer Brennweite des Laserstrahls erreicht werden.

Zur Lasermarkierung oder Herstellung spezieller Merkmale des Wert- und/oder Sicherheitsdokuments, insbesondere zur Herstellung von CLI (changeable laser image) - oder MLI (multi laser image) -Elementen, kann es unter anderem erforderlich sein, einen gewünschten Beschriftungswinkel einzustellen. Der Beschriftungswinkel kann hierbei einen Einfallswinkel des Laserstrahls relativ zu der zu beschriftenden Fläche bezeichnen. Hierzu kann die zu bearbeitende Fläche um mindestens eine Rotationsachse gedreht werden, welche vorzugsweise koplanar zur Beschriftungsoberfläche liegt und in der gleichen Ebene wie das herzustellende Merkmal angeordnet ist. Bei der Einstellung verschiedener Beschriftungswinkel ist in der Regel nach der Veränderung des Winkels eine neue Einstellung des Arbeitsabstandes oder der Brennweite des Laserstrahls notwendig.

Üblicherweise werden Rotationsbewegungen zur Einstellung verschiedener Beschriftungswinkel durch Rotation um zwei unabhängige Drehachsen durch jeweils einen Motor erzeugt. Hierbei ist in der Regel ein erster Motor zur Drehung um eine erste Achse mit dem Aufbau zur Drehung um die zweite Achse fest verbunden und muss durch den zweiten Motor mitgedreht werden. Kabel des ersten Motors, insbesondere Strom- und Signalkabel müssen dementsprechend beweglich geführt werden. Zur Einstellung verschiedener Arbeitsabstände kann es dann weiter erforderlich sein, einen dritten Motor vorzusehen, welcher den gesamten Aufbau zur Umsetzung der Rotationsbewegungen mit dem ersten und dem zweiten Motor und den zugehörigen Kabeln mit bewegen muss.

Es stellt sich das technische Problem, ein Verfahren und eine Vorrichtung zur Positionierung eines Dokumentenkörpers zu schaffen, die eine hochgenaue, jedoch kostengünstig und einfach implementierbare Positionierung des Dokumentenkörpers, insbesondere zur Einstellung eines gewünschten Beschriftungswinkels, ermöglichen. Weiter stellt sich das technische Problem, eine Vorrichtung und ein Verfahren zur Herstellung eines Dokumentenkörpers zu schaffen, die eine Herstellung mit gewünschter Qualität ermöglichen.

Die Lösung des technischen Problems ergibt sich durch die Gegenstände mit den Merkmalen der Ansprüche 1 und 8. Weitere vorteilhafte Ausgestaltungen der Erfindung ergeben sich aus den Unteransprüchen.

Beschrieben wird eine Vorrichtung zur Positionierung eines Dokumentenkörpers. Diese kann auch als Vorrichtung zur Ausrichtung des Dokumentenkörpers beschrieben werden. Der Dokumentenkörper kann insbesondere ein Dokumentenkörper eines Wert- und/oder Sicherheitsdokuments sein. Eine Positionierung kann die Einstellung oder Veränderung einer Position und/oder einer Orientierung des Dokumentenkörpers in einem Referenzkoordinatensystem bezeichnen.

Ein Dokumentenkörper kann insbesondere ein Dokumentenkörper eines Wert- und/oder Sicherheitsdokuments sein. Ein Dokumentenkörper kann weiter insbesondere ein sogenannter Dokumentenrohling sein. Ein solcher kann z.B. als Kunststoffkörper ausgebildet sein. Es ist jedoch selbstverständlich auch möglich, dass Dokumentenkörper auch weitere Materialien umfassen, beispielsweise Papier, Metallfolien, belichtete Hologramme oder aber auch insbesondere mikroelektronische Schaltkreise und Mikrochips.

Dokumentenkörper können bereits zumindest teilweise personalisiert und/oder individualisiert sein. Dies kann bedeuten, dass in dem Dokumentenkörper bereits Informationen enthalten oder in den Dokumentenkörper eingebracht sind, die spezifisch für eine zur Führung des Dokuments autorisierte Person sind. Selbstverständlich kann der Dokumentenkörper auch weitere Merkmale umfassen oder enthalten, insbesondere Sicherheitsmerkmale oder Sicherheitselemente. Sicherheits- und/oder Wertdokumente sind Dokumente, die mindestens ein Sicherheitsmerkmal aufweisen, welches eine Nachahmung, Verfälschung, ein Kopieren oder Ähnliches zumindest erschwert oder unmöglich macht. Als Wertdokumente können insbesondere Sicherheitsdokumente bezeichnet werden, die einen Wert verkörpern. Sicherheitsdokumente können beispielsweise Reisepässe, Personalausweise, Identifikationskarten, Zugangskarten, Führerscheine, Tickets, aber auch Verpackungen und Echtheitszertifikate sein. Wertdokumente können beispielsweise Postwertzeichen, Banknoten, Aktien, Zollmarken und Ähnliches sein.

Der Dokumentenkörper kann hierbei relativ zu einem Referenzkoordinatensystem positioniert werden. Das Referenzkoordinatensystem kann insbesondere durch eine Vertikalrichtung, eine Längsrichtung und eine Querrichtung festgelegt sein, wobei diese Richtungen senkrecht zueinander orientiert sein können. In einer Referenzlage kann eine Oberfläche des Dokumentenkörpers und, wie nachfolgend noch näher erläutert, eine Auflagefläche eines Auflageelements der Vorrichtung, senkrecht zur Vertikalrichtung orientiert sein. In diesem Fall kann die von der Längs- und Querrichtung aufgespannte Ebene parallel zu der Oberfläche des Dokumentenkörpers bzw. der Auflagefläche orientiert sein.

Die Vorrichtung umfasst mindestens eine Halteeinrichtung. Die Halteeinrichtung kann hierbei eine Gesamtheit von mechanisch starr, also ortsfest zueinander, angeordneten Elementen bezeichnen. Die Halteeinrichtung bzw. die Elemente der Halteeinrichtung können insbesondere ortsfest relativ zu dem erläuterten Referenzkoordinatensystem angeordnet sein.

Weiter umfasst die Vorrichtung mindestens eine Linearantriebseinrichtung. Die Linearantriebseinrichtung kann mindestens einen Linearaktor und mindestens eine Linearachse umfassen. Die Linearachse kann hierbei entlang einer linearen Bewegungstrajektorie bewegbar sein.

Weiter umfasst die Vorrichtung mindestens ein Auflageelement für den Dokumentenkörper. Das Auflageelement kann auch als Werkstückträger bezeichnet werden. Das Auflageelement kann eine Auflagefläche für den Dokumentenkörper aufweisen oder ausbilden. Diese Auflagefläche kann insbesondere eine plane, ebene Oberfläche sein.

Weiter ist die mindestens eine Linearantriebseinrichtung an der Halteeinrichtung gelagert. Im Sinne dieser Erfindung bezeichnet eine Lagerung eine mechanische Verbindung, die, je nach Ausführungsform der Lagerung, keine oder eine Relativbewegung der über die Lagerung miteinander verbundenen Teile zulässt. Wie nachfolgend noch näher erläutert, kann die mindestens eine Linearantriebseinrichtung hierbei starr, also nicht drehbar und nicht translatorisch bewegbar, an der Halteeinrichtung befestigt sein. Es ist jedoch auch möglich, dass die mindestens eine Linearantriebseinrichtung um eine oder um mehrere Drehachse(n), vorzugsweise um genau zwei Drehachsen, drehbar an der Halteeinrichtung gelagert ist.

Weiter ist ein linear bewegliches Abtriebselement, insbesondere die erläuterte Linearachse, der Linearantriebseinrichtung über eine Drehlagereinrichtung mit dem Auflageelement verbunden. Die Drehlagereinrichtung kann insbesondere ein Kugellager sein. Die Drehlagereinrichtung kann einen abtriebselementseitigen Teil und einen auflageelementseitigen Teil umfassen. Es ist möglich, dass die Drehlagereinrichtung oder der auflageelementseitige Teil der Drehlagereinrichtung ortsfest relativ zum Auflageelement angeordnet ist. Allerdings ist es, wie nachfolgend noch näher erläutert, auch möglich, dass die Drehlagereinrichtung oder der auflageelementseitige Teil der Drehlagereinrichtung beweglich, insbesondere mit einem oder zwei linearen Freiheitsgraden beweglich relativ zu dem Auflageelement angeordnet bzw. mit diesem verbunden ist.

Eine Drehlagereinrichtung kann hierbei eine Rotation mit mehreren Freiheitsgraden, insbesondere drei Rotationsfreiheitsgraden, also um mehrere Drehachsen ermöglichen. Insbesondere kann das Auflageelement über die Drehlagereinrichtung derart mit dem Abtriebselement oder mit den Abtriebselementen verbunden sein, dass eine Drehbewegung des Auflageelements um eine oder um zwei Drehachsen möglich ist.

Weiter ist das Auflageelement über eine weitere Drehlagereinrichtung an der Halteeinrichtung gelagert. Diese weitere Drehlagereinrichtung oder der auflageelementseitige Teil der weiteren Drehlagereinrichtung kann hierbei ortsfest relativ zum Auflageelement angeordnet sein.

Alternativ kann das Auflageelement über die weitere Drehlagereinrichtung mit einem linear beweglichen Abtriebselement, insbesondere einer Linearachse, mit einer weiteren Linearantriebseinrichtung verbunden sein. Auch in diesem Fall kann die weitere Drehlagereinrichtung oder der auflageelementseitige Teil der weiteren Drehlagereinrichtung ortsfest oder mit einem oder zwei linearen Bewegungsfreiheitsgraden beweglich relativ zum Auflageelement angeordnet sein.

Es ist weiter möglich, dass das Auflageelement über mindestens ein zusätzliches Festlager an der Halteeinrichtung gelagert ist.

Hierdurch ergibt sich in vorteilhafter Weise eine einfache Veränderung zumindest einer Orientierung eines auf der Auflagefläche des Auflageelements aufliegenden Dokumentenkörpers relativ zum Referenzkoordinatensystem durch eine lineare Bewegung des Abtriebselements der mindestens einen Linearantriebseinrichtung. Durch die Veränderung der Orientierung kann auch ein Einfallswinkel eines Laserstrahls auf die Dokumentenoberfläche oder eine Lage des Dokumentenkörpers verändert werden. Dies kann besonders vorteilhaft zur Herstellung spezieller Merkmale des Dokumentenkörpers, insbesondere zur Herstellung von CLI- oder MLI-Elementen, genutzt werden.

Weiter kann es möglich sein, auch einen Arbeitsabstand von einer nachfolgend noch näher erläuterten Einrichtung zur Bereitstellung eines Laserstrahls durch die Linearbewegung des Abtriebselements der mindestens einen Linearantriebseinrichtung einzustellen.

Ein Arbeitsabstand kann hierbei einen Abstand zwischen einem auf der Auflagefläche angeordneten Dokumentenkörper und der Einrichtung zur Bereitstellung eines Laserstrahls, insbesondere eines Referenzpunkts dieser Einrichtung, z.B. einem den Laserstrahl fokussierenden Element, bezeichnen, der entlang der Vertikalrichtung des Referenzkoordinatensystems gemessen wird. Eine Brennweite des Laserstrahls kann durch Veränderung der Divergenz des Laserstrahls vor dem fokussieren Element verändert werden.

Dies wiederum ermöglicht in vorteilhafter Weise, die Position und Orientierung des Dokumentenkörpers im Referenzkoordinatensystem einzustellen. Dies wiederum ermöglicht die Einstellung verschiedener Einfallswinkel für einen Laserstrahl, der von einer Einrichtung zur Bereitstellung eines Laserstrahls bereitgestellt wird. Auch kann durch die Einstellung eines Arbeitsabstands eine Lage eines Fokuspunkts des Laserstrahls zum Dokumentenkörper eingestellt werden. Durch die Einstellung des Einfallswinkels und der Lage des Fokuspunkts kann eine Laserbeschriftung des Dokumentenkörpers mit gewünschten Beschriftungseigenschaften durchgeführt werden. Allerdings ist die Vorrichtung nicht auf die Verwendung bei der Laserbeschriftung begrenzt. Auch kann die Vorrichtung verwendet werden, um mittels einer Bilderfassungseinrichtung Abbilder des Dokumentenkörpers in verschiedenen Positionen und/oder Orientierungen und gegebenenfalls in verschiedenen Fokuslagen zu erzeugen.

Insgesamt ist die Vorrichtung mit wenigen Bauteilen somit kostengünstig und bauraumsparend zu realisieren, wobei gleichzeitig jedoch eine genaue Positionierung des Dokumentenkörpers ermöglicht wird. Weiter ergibt sich eine geringe Störanfälligkeit beim Betrieb der Vorrichtung und eine geringe Komplexität des Aufbaus.

Weiter umfasst die Vorrichtung genau eine Linearantriebseinrichtung, wobei das Auflageelement über die weitere Drehlagereinrichtung an der Halteeinrichtung gelagert ist. Dies wurde vorhergehend bereits erläutert. Weiter ist das Auflageelement zusätzlich über mindestens eine Radiallagereinrichtung gelagert, insbesondere an der Halteeinrichtung. Die Radiallagereinrichtung kann hierbei ortsfest angeordnet sein, insbesondere relativ zur Halteeinrichtung. Die Radiallagereinrichtung lässt hierbei die Rotation um nur eine Rotationsachse zu. Hierbei kann die Radiallagereinrichtung derart angeordnet und/oder ausgebildet sein, dass das Auflageelement um eine vorbestimmte, gewünschte Rotationsachse verdrehbar ist, insbesondere die Rotationsachse der Radiallagereinrichtung.

Insbesondere kann die Radiallagereinrichtung derart angeordnet sein, dass eine Rotationsachse der Radiallagereinrichtung parallel zu der vorhergehend erläuterten Längsrichtung oder parallel zu der vorhergehend erläuterten Querrichtung des Referenzkoordinatensystems orientiert ist.

Vorzugsweise ist bei dieser Ausführungsform die Linearantriebseinrichtung um eine, weiter vorzugsweise um zwei Drehachse(n) drehbar gelagert. Die Drehachsen können hierbei senkrecht zueinander orientiert sein. In diesem Fall ist die Linearantriebseinrichtung kardanisch gelagert. Hierbei können die erste Drehachse parallel zur vorhergehend erläuterten Längsrichtung und die weitere Drehachse parallel zur vorhergehend erläuterten Querrichtung des Referenzkoordinatensystems orientiert sein, wenn sich das Auflageelement in der vorhergehend erläuterten Ausgangslage befindet.

Hierdurch ergibt sich in vorteilhafter Weise eine besonders kostengünstige Realisierung der Vorrichtung. In dieser Ausführungsform kann eine nachfolgend noch näher erläuterte Einrichtung zur Bereitstellung eines Laserstrahls vorzugsweise eine Einrichtung zur Veränderung einer Fokuslage des Laserstrahls umfassen.

Alternativ umfasst die Vorrichtung eine erste und eine zweite Linearantriebseinrichtung, also genau zwei Linearantriebseinrichtungen, wobei die Linearantriebseinrichtungen jeweils an der Halteeinrichtung gelagert sind. Weiter sind linear bewegliche Abtriebselemente der Linearantriebseinrichtungen jeweils über eine Drehlagereinrichtung mit dem Auflageelement verbunden. In dieser Ausführungsform kann das Auflageelement zusätzlich über eine weitere Drehlagereinrichtung an der Halteeinrichtung gelagert sein. Allerdings ist es nicht notwendig, dass das Auflageelement über eine weitere Radiallagereinrichtung, die z.B. ortsfest relativ zur Halteeinrichtung angeordnet ist, an der Halteeinrichtung gelagert ist.

Hierdurch ergibt sich in vorteilhafter Weise, dass die Auflagefläche des Auflageelements durch die Linearbewegung der Abtriebselemente um mindestens eine Drehachse, vorzugsweise jedoch um zwei senkrecht zueinander orientierte Drehachsen, verdreht werden kann. Hierdurch ergibt sich in vorteilhafter Weise wiederum, dass ein auf der Auflagefläche aufliegender Dokumentenkörper in einer Vielzahl von Orientierungen positioniert werden kann.

Alternativ umfasst die Vorrichtung eine erste, eine zweite und eine dritte Linearantriebseinrichtung, also genau drei Linearantriebseinrichtungen, wobei die Linearantriebseinrichtungen jeweils an der Halteeinrichtung gelagert sind, wobei linear bewegliche Abtriebselemente der Linearantriebseinrichtungen jeweils über eine Drehlagereinrichtung mit dem Auflageelement verbunden sind. In diesem Fall ist es nicht notwendig, dass das Auflageelement zusätzlich über eine Drehlagereinrichtung und/oder eine Radiallagereinrichtung an der Halteeinrichtung gelagert ist.

Hierdurch erhöht sich in vorteilhafter Weise ebenfalls die Menge an Orientierungen und/oder Arbeitsabständen, die für einen auf der Auflagefläche aufliegenden Dokumentenkörper eingestellt werden können.

In einer weiteren Ausführungsform sind die Linearantriebseinrichtungen jeweils starr an der Halteeinrichtung gelagert. Weiter ist eine Drehlagereinrichtung oder ein auflageelementseitiger Teil der Drehlagereinrichtung, über die ein Abtriebselement einer ersten Linearantriebseinrichtung mit dem Auflageelement verbunden ist, linear beweglich an dem Auflageelement gelagert. Weiter ist eine weitere Drehlagereinrichtung oder ein auflageelementseitiger Teil der weiteren Drehlagereinrichtung, über die ein Abtriebselement einer weiteren Linearantriebseinrichtung an dem Auflageelement gelagert ist, frei beweglich an dem Auflageelement gelagert, insbesondere mit zwei Translationsfreiheitsgraden. Somit kann eine Bewegungsrichtung der Drehlagereinrichtung oder des auflageelementseitigen Teils entlang des Auflageelements einen entlang einer ersten Raumrichtung orientierten Anteil und/oder einen entlang einer weiteren Raumrichtung orientierten Anteil umfassen, wobei die erste und weitere Raumrichtung vorzugsweise aber nicht zwingend senkrecht zueinander orientiert sind.

Hierdurch ergibt sich in vorteilhafter Weise, dass keine kardanische oder drehbare Lagerung der Linearantriebseinrichtungen notwendig ist. Dies reduziert wiederum in vorteilhafter Weise Herstellungskosten.

In einer alternativen Ausführungsform ist mindestens eine Drehlagereinrichtung um zwei voneinander verschiedene Drehachsen drehbar an der Halteeinrichtung gelagert. Insbesondere kann die Drehlagereinrichtung kardanisch an der Halteeinrichtung gelagert sein. Umfasst die Vorrichtung genau eine oder genau zwei Linearantriebseinrichtungen, so können diese jeweils um zwei voneinander verschiedene Drehachsen drehbar, vorzugsweise kardanisch, an der Halteeinrichtung gelagert sein. Umfasst die Vorrichtung drei Linearantriebseinrichtungen, so kann mindestens eine der Linearantriebseinrichtungen um zwei voneinander verschiedene Drehachsen und eine weitere Linearantriebseinrichtung um eine Drehachse drehbar an der Halteeinrichtung gelagert sein. Die verbleibende Linearantriebseinrichtung kann dann starr an der Halteeinrichtung gelagert sein.

Hierdurch ergibt sich in vorteilhafter Weise eine einfache und genaue Positionierung eines auf der Auflagefläche aufliegenden Dokumentenkörpers in einer gewünschten Orientierung.

In einer weiteren Ausführungsform sind die erste und die zweite Linearantriebseinrichtung jeweils kardanisch an der Halteeinrichtung gelagert.

In einer alternativen Ausführungsform sind die erste Linearantriebseinrichtung starr, die zweite Linearantriebseinrichtung um eine Drehachse drehbar und die dritte Linearantriebseinrichtung um zwei voneinander verschiedene Drehachsen drehbar an der Halteeinrichtung gelagert, insbesondere kardanisch.

In einer weiteren Ausführungsform sind die Bewegungsrichtungen der Linearantriebseinrichtungen zumindest in der erläuterten Ausgangslage parallel zueinander orientiert.

Weiter beschrieben wird ein Verfahren zur Positionierung eines Dokumentenkörpers mittels einer Vorrichtung gemäß einer der in dieser Offenbarung offenbarten Ausführungsformen. Hierbei wird das linear bewegliche Abtriebselement der mindestens einen Linearantriebseinrichtung derart bewegt, dass eine gewünschte Position und/oder Orientierung der Auflagefläche des Auflageelements eingestellt wird. Umfasst die Vorrichtung mehrere Linearantriebseinrichtungen, so können auch mehr als ein linear bewegliches Abtriebselement derart bewegt werden, dass die gewünschte Position und/oder Orientierung der Auflagefläche im Referenzkoordinatensystem eingestellt wird.

Weiter kann das linear bewegliche Abtriebselement der mindestens einen Linearantriebseinrichtung auch derart bewegt werden, dass ein gewünschter Arbeitsabstand der Auflagefläche von einer Einrichtung zur Bereitstellung eines Laserstrahls eingestellt wird.

Hierzu kann die Vorrichtung eine Steuer- und Auswerteeinrichtung umfassen, die die mindestens eine Linearantriebseinrichtung entsprechend steuert. Die Steuer- und Auswerteeinrichtung kann hierbei einen Mikrocontroller umfassen oder als solcher ausgebildet sein.

Erfindungsgemäß vorgeschlagen wird eine Vorrichtung zur Herstellung eines Dokumentenkörpers, insbesondere eines Dokumentenkörpers eines Wert- und/oder Sicherheitsdokuments. Die Vorrichtung zur Herstellung umfasst hierbei eine Vorrichtung zur Positionierung eines Dokumentenkörpers gemäß einer der in dieser Offenbarung offenbarten Ausführungsformen. Weiter umfasst die Vorrichtung mindestens eine Einrichtung zur Bereitstellung eines Laserstrahls. Diese Einrichtung zur Bereitstellung eines Laserstrahls kann beispielsweise eine Einrichtung zur Erzeugung des Laserstrahls umfassen. Weiter kann die Einrichtung mindestens eine Einrichtung zur Strahlführung und/oder mindestens eine Einrichtung zur Strahlformung umfassen. Insbesondere kann die Einrichtung mindestens eine Einrichtung zur Veränderung einer Brennweite des Laserstrahls umfassen.

Die Einrichtung zur Bereitstellung eines Laserstrahls kann hierbei ortsfest relativ zu dem Referenzkoordinatensystem angeordnet sein. Es ist möglich, dass die Einrichtung zur Bereitstellung eines Laserstrahls an der Halteeinrichtung gelagert ist, insbesondere starr. Insbesondere kann ein Laserstrahl in einer Referenzorientierung parallel zur Vertikalrichtung des Referenzkoordinatensystems erzeugt werden. Durch Mittel zur Strahlführung, beispielsweise Spiegelelemente, insbesondere Galvanospiegelelemente, kann jedoch die Ausrichtung des Laserstrahls verändert werden.

Ein Arbeitsabstand zwischen dem Auflageelement, insbesondere der Auflagefläche des Auflageelements, und der Einrichtung zur Bereitstellung eines Laserstrahls kann hierbei entlang der Vertikalrichtung gemessen werden. Beispielsweise kann der Arbeitsabstand als Distanz zwischen einem Referenzpunkt der Einrichtung zur Bereitstellung eines Laserstrahls und der Auflagefläche entlang der Vertikalrichtung gemessen werden. Der Referenzpunkt kann beispielsweise ein geometrischer Mittelpunkt einer Fokussierlinse bzw. einer Planfeldlinse der Einrichtung zur Bereitstellung eines Laserstrahls sein.

Durch die Einstellung des Arbeitsabstands kann insbesondere auch eine Lage eines Fokuspunktes des Laserstrahls relativ zur Auflagefläche und somit relativ zu einem auf dieser Auflagefläche aufliegenden Dokumentenkörpers eingestellt werden. Alternativ oder kumulativ ist es selbstverständlich auch möglich, die relative Lage des Fokuspunkts zur Auflagefläche durch eine Einrichtung zur Veränderung einer Brennweite bzw. einer Fokuslage der Einrichtung zur Bereitstellung eines Laserstrahls zu verändern.

Hierdurch ergibt sich in vorteilhafter Weise, dass verschiedene Einfallswinkel eines Laserstrahls relativ zum Dokumentenkörper eingestellt werden können, wobei der Laserstrahl zur Laserbeschriftung des Dokumentenkörpers dient. Gegebenenfalls kann auch eine relative Lage eines Fokuspunktes des Laserstrahls zum Dokumentenkörper eingestellt werden. Dies ermöglicht wiederum in vorteilhafter Weise eine Laserbeschriftung mit gewünschten Eigenschaften.

In einer weiteren Ausführungsform umfasst die Vorrichtung mindestens eine Einrichtung zur Veränderung einer Fokuslage des Laserstrahls. Dies ermöglicht in vorteilhafter Weise, dass die Lage des Fokuspunkts relativ zum Dokumentenkörper eingestellt werden kann.

In einer weiteren Ausführungsform umfasst die Einrichtung zur Veränderung der Fokuslage eine Einrichtung zur variablen Strahlaufweitung und/oder eine Fokussierlinse. Die Einrichtung zur variablen Strahlaufweitung kann z.B. als Strahlaufweitungsteleskop ausgebildet sein.

Dies ermöglicht eine einfache Einstellung der Fokuslage.

Weiter vorgeschlagen wird ein Verfahren zum Betrieb einer Vorrichtung zur Herstellung eines Dokumentenkörpers gemäß einer der in dieser Erfindung offenbarten Ausführungsform. Hierbei wird das linear bewegliche Abtriebselement der mindestens einen Linearantriebseinrichtung derart bewegt, dass eine gewünschte Position und/oder Orientierung der Auflagefläche im Referenzkoordinatensystem eingestellt wird. Weiter kann ein Laserstrahl bereitgestellt werden. Der Laserstrahl kann auf einen Dokumentenkörper, der auf der Auflagefläche angeordnet ist, gestrahlt werden.

In einer weiteren Ausführungsform wird eine Fokuslage des Laserstrahls verändert.

Die Erfindung wird anhand von Ausführungsbeispielen näher erläutert. Die Figuren zeigen:
- Fig. 1: eine schematische perspektivische Ansicht einer erfindungsgemäßen Vorrichtung in einer ersten Ausführungsform,
- Fig. 2: eine schematische perspektivische Ansicht einer erfindungsgemäßen Vorrichtung in einer weiteren Ausführungsform,
- Fig. 3: eine schematische perspektivische Ansicht einer erfindungsgemäßen Vorrichtung in einer weiteren Ausführungsform und
- Fig. 4: eine schematische perspektivische Ansicht einer erfindungsgemäßen Vorrichtung in einer weiteren Ausführungsform.

Nachfolgend bezeichnen gleiche Bezugszeichen Elemente mit gleichen oder ähnlichen technischen Merkmalen.

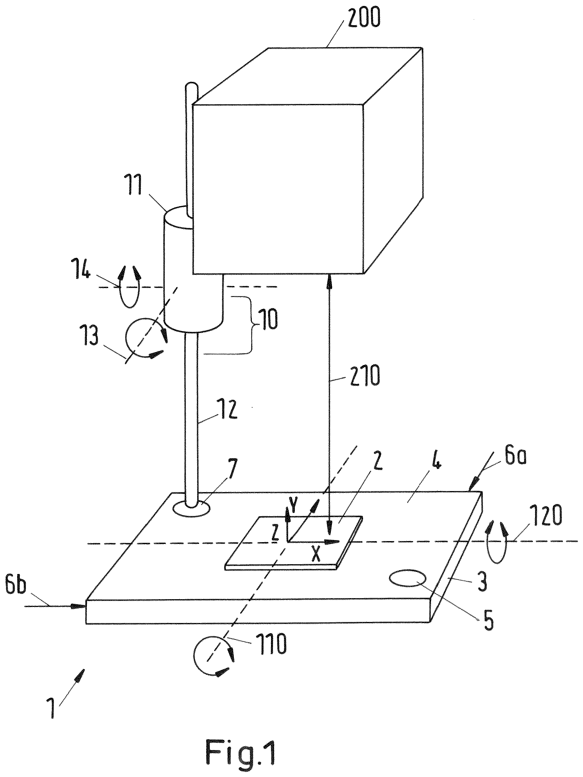

Fig. 1 zeigt eine schematische perspektivische Ansicht einer Vorrichtung 1 zur Positionierung eines Dokumentenkörpers 2 gemäß einer ersten Ausführungsform. Die Vorrichtung 1 umfasst einen Werkstückträger 3. Dieser kann z.B. plattenförmig ausgebildet sein. Der Werkstückträger 3 weist eine Auflagefläche 4 für den Dokumentenkörper 2 auf. Es ist möglich, dass der Werkstückträger 3 mindestens ein Befestigungsmittel, z.B. ein Klemmelement oder ein Ansaugelement, zum Befestigen des Dokumentenkörpers 2 an der Auflagefläche 4 aufweist.

Weiter dargestellt ist ein erstes Kugelgelenk 5 des Werkstückträgers 3, wobei der Werkstückträger 3 über dieses erste Kugelgelenk 5 an einer nicht dargestellten Halteeinrichtung gelagert ist. Das erste Kugelgelenk 5 ermöglicht eine rotatorische Bewegung des gelagerten Abschnitts des Werkstückträgers 3 in alle Richtungen, jedoch keine translatorische Bewegung.

Weiter dargestellt ist ein Referenzkoordinatensystem mit einer Längsachse x, einer Querachse y und einer Vertikalachse z. Die Achsen x, y, z sind rechtwinklig zueinander orientiert. In der in Fig. 1 dargestellten Ausgangslage des Dokumentenkörpers 2 ist die Vertikalachse z senkrecht zur Auflagefläche 4 und zu einer Ober- bzw. Vorderseite des Dokumentenkörpers 2 orientiert. Dargestellt ist auch ein Arbeitsabstand 210, der entlang der Vertikalachse z gemessen wird.

Weiter dargestellt sind ein erstes Festlager 6a und ein zweites Festlager 6b, wobei der Werkstückträger 3 entweder über das erste Festlager 6a oder über das zweite Festlager 6b an der nicht dargestellten Halteeinrichtung gelagert ist. Das erste Festlager 6a oder das zweite Festlager 6b ermöglicht hierbei jeweils eine Rotation und keine Translationsbewegung des gelagerten Abschnitts des Werkstückträgers 3.

Weiter umfasst die Vorrichtung 1 eine erste Linearantriebseinrichtung 10, wobei die erste Linearantriebseinrichtung 10 einen ersten Linearaktor 11 und eine erste Linearachse 12 umfasst. Durch Betreiben des Linearaktors 10 kann die erste Linearachse 12 in und entgegen einer Richtung bewegt werden, die parallel zu einer zentralen Symmetrieachse der ersten Linearachse 12 orientiert ist. Die Bewegung der ersten Linearachse 12 ist somit eine Linearbewegung.

Die erste Linearantriebseinrichtung 10, insbesondere der erste Linearaktor 11, ist hierbei drehbar an der nicht dargestellten Halteeinrichtung gelagert. Insbesondere ist die erste Linearantriebseinrichtung 10 kardanisch an der Halteeinrichtung gelagert. Dargestellt ist eine erste Drehachse 13 und eine zweite Drehachse 14, wobei die erste Linearantriebseinrichtung um diese Drehachsen 13, 14 drehbar an der nicht dargestellten Halteeinrichtung gelagert ist. Drehrichtungen sind durch Pfeile angedeutet. Die Drehachsen 13, 14 sind hierbei vorzugsweise rechtwinklig zueinander orientiert. Ebenfalls sind die Drehachsen 13, 14 rechtwinklig zu einer Trajektorie der Linearbewegung der Linearachse 12 angeordnet.

Ein werkstückträgerseitiges Ende der ersten Linearachse 12 ist hierbei über ein weiteres Kugellager 7 des Werkstückträgers 3 an dem Werkstückträger 3 befestigt.

Weiter dargestellt ist eine Beschriftungseinrichtung 200. Diese Beschriftungseinrichtung 200 kann beispielsweise eine Einrichtung zur Erzeugung eines Laserstrahls umfassen. Weiter kann die Beschriftungseinrichtung Mittel zur Strahlführung und/oder Strahlformung des Laserstrahls umfassen. Z.B. kann die Beschriftungseinrichtung 200 mindestens eine Einrichtung zur Einstellung einer Strahlrichtung eines erzeugten Laserstrahls umfassen. Beispielsweise kann die Beschriftungseinrichtung 200 einen sogenannten Galvanometerscanner umfassen. Weiter kann die Beschriftungseinrichtung 200 mindestens eine Einrichtung zur Einstellung einer Fokuslage des erzeugten Laserstrahls umfassen, beispielsweise ein variables Strahlaufweitungsteleskop. Eine nachfolgende Planfeldlinse, auch als Fokussierlinse bezeichnet, fokussiert den Laserstrahl auf den Dokumentenkörper.

Weiter dargestellt ist eine erste Drehachse 110 des Werkstückträgers 3. Ist der Werkstückträger 3 über das erste Festlager 6a (und nicht über das zweite Festlager 6b) an der nicht dargestellten Halteeinrichtung gelagert, so kann durch eine Linearbewegung der ersten Linearachse 12 eine Drehbewegung des Werkstückträgers 3 und somit des auf der Auflagefläche 4 des Werkstückträgers 3 angeordneten Dokumentenkörpers 2 um diese erste Drehachse 110 erfolgen, wobei die erste Drehachse 110 parallel zur Querachse y des Referenzkoordinatensystem orientiert ist.

Ist der Werkstückträger 3 über das zweite Festlager 6b (und nicht über das erste Festlager 6a) an der nicht dargestellten Halteeinrichtung gelagert, so kann eine derartige Drehbewegung um die zweite Drehachse 120 des Werkstückträgers 3 erfolgen, wobei die zweite Drehachse 120 parallel zur Längsachse x des Referenzkoordinatensystem orientiert ist.

In der in Fig. 1 dargestellten Ausführungsform umfasst die Beschriftungseinrichtung 200 vorzugsweise eine Einrichtung zur Veränderung einer Brennweite eines Laserstrahls. Die Vorrichtung 1 ermöglicht hierbei zwar die Einstellung eines Einfallwinkels eines erzeugten Laserstrahls relativ zum Dokumentenkörper 2, nicht jedoch die Einstellung eines Arbeitsabstands zwischen der Beschriftungseinrichtung 200 und dem Dokumentenkörper 2. Somit ist es nicht oder nur in einem eingeschränkten Maße möglich, durch Betreiben der Linearantriebseinrichtung 10 und eine Linearverschiebung der Linearachse 11 eine Fokuslage des Laserstrahls relativ zur Auflagefläche 4 und somit auch zum Dokumentenkörper 2 einstellen. Dies kann jedoch durch die Veränderung der Brennweite und somit der Fokuslage eingestellt werden.

Die Beschriftungseinrichtung 200 ist hierbei ebenfalls ortsfest relativ zu der nicht dargestellten Halteeinrichtung angeordnet, insbesondere an der Halteeinrichtung befestigt oder gelagert.

Hierbei ist dargestellt, dass das erste Kugellager 5 in einem ersten Eckbereich des Werkstückträgers 3 und das weitere Kugellager 7 in einem weiteren Eckbereich, vorzugsweise einem diagonal gegenüberliegenden Eckbereich, des Werkstückträgers 3 angeordnet ist. Insbesondere spannen die Verbindungsabschnitte oder Verbindungselemente von Linearantriebseinrichtungen und Werkstückträger 3 bzw. von Halteeinrichtung und Werkstückträger, z.B. die Kugellager 5, 7 bzw. Festlager 6a oder 6b, eine Ebene auf. Auch die Verbindungsabschnitte oder Verbindungselemente von Halteeinrichtung und Werkstückträger 2, z.B. die Festlager 6a oder 6b, können eine Ebene aufspannen.

Weiter sollten die Verbindungsabschnitte oder -elemente möglichst weit auseinander liegen. Hierdurch kann die Anordnung der Verbindungsabschnitte von der Ausbildung des Dokumententrägers abhängig sein.

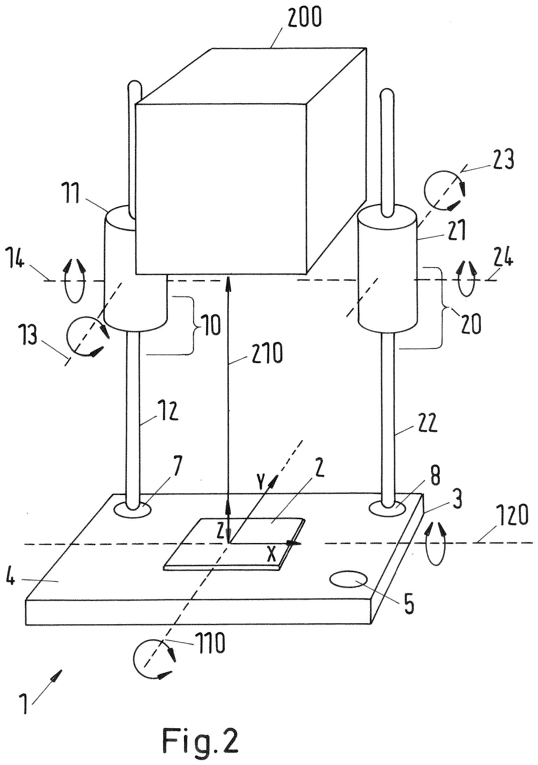

In Fig. 2 ist eine schematische perspektivische Ansicht einer erfindungsgemäßen Vorrichtung 1 zur Positionierung eines Dokumentenkörpers 2 in einer weiteren Ausführungsform dargestellt. Die in Fig. 2 dargestellte Ausführungsform ist hierbei im Wesentlichen wie die in Fig. 1 dargestellte Ausführungsform ausgebildet. Daher kann auf die Erläuterung zu Fig. 1 verwiesen werden. Im Unterschied zu der in Fig. 1 dargestellten Ausführungsform ist der Werkstückträger 3 bei der in Fig. 2 dargestellten Ausführungsform nicht über Festlager 6a, 6b (siehe Fig. 1) an einer Halteeinrichtung gelagert. Als weiteren Unterschied umfasst die Vorrichtung 1 eine zweite Linearantriebseinrichtung 20, wobei die zweite Linearantriebseinrichtung 20 einen zweiten Linearaktor 21 und eine zweite Linearachse 22 umfasst. Auch die zweite Linearantriebseinrichtung 20, insbesondere der zweite Linearaktor 21, ist drehbar, insbesondere kardanisch, an der Halteeinrichtung gelagert. Dargestellt ist eine erste Drehachse 23 und eine zweite Drehachse 24 der zweiten Linearantriebseinrichtung, wobei die zweite Linearantriebseinrichtung 20 drehbar um diese Drehachsen 23, 24 an der Halteeinrichtung gelagert ist. Die Drehachsen 23, 24 sind hierbei vorzugsweise rechtwinklig zueinander orientiert. Ebenfalls sind die Drehachsen rechtwinklig zu einer Trajektorie der Linearbewegung der zweiten Linearachse 22 angeordnet.

Der Werkstückträger 3 umfasst ein drittes Kugellager 8, wobei ein werkstückträgerseitiges Ende der zweiten Linearachse 22 über dieses dritte Kugellager 8 an dem Werkstückträger 3 befestigt ist.

Durch eine Linearbewegung der Linearachsen 12, 22 kann ein Einfallswinkel eines von der Beschriftungseinrichtung 200 erzeugten Laserstrahls auf den Dokumentenkörper 2 eingestellt werden. Auch in dieser Ausführungsform kann die Beschriftungseinrichtung 200 eine Einrichtung zur Veränderung einer Brennweite des Laserstrahls umfassen, insbesondere um die Fokuslage zwischen dem Dokumentenkörper 2 und der Beschriftungseinrichtung 200 einzustellen.

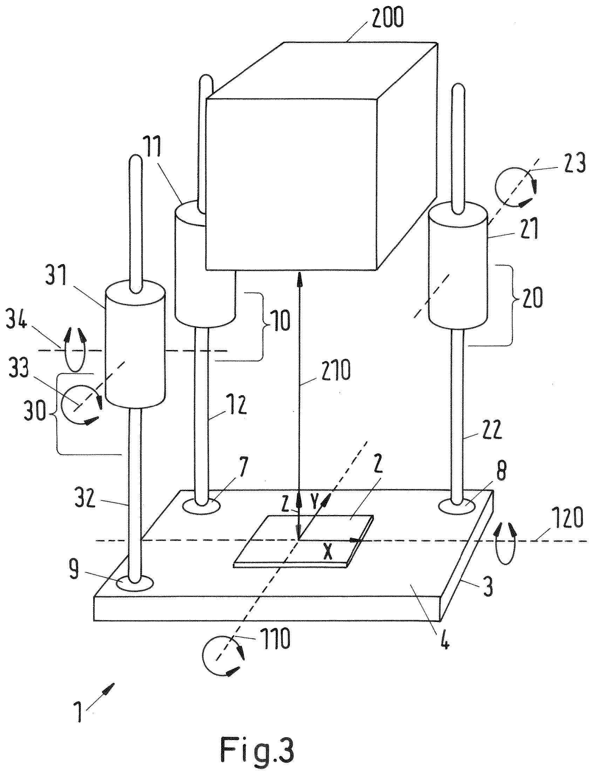

Fig. 3 zeigt eine perspektivische schematische Ansicht einer Vorrichtung 1 zur Positionierung eines Dokumentenkörpers 2 in einer weiteren Ausführungsform. Die in Fig. 3 dargestellte Ausführungsform ist hierbei im Wesentlichen wie die in Fig. 2 dargestellte Ausführungsform ausgebildet. Daher wird auf die Ausführungen zu Fig. 2 verwiesen. Im Unterschied zu der in Fig. 2 dargestellten Ausführungsform umfasst die Vorrichtung 1, insbesondere der Werkstückträger 3, kein erstes Kugellager 5 zur Lagerung des Werkstückträgers 3 an einer nicht dargestellten Halteeinrichtung. Als weiterer Unterschied ergibt sich, dass die Vorrichtung 1 bei der in Fig. 3 dargestellten Ausführungsform eine dritte Linearantriebseinrichtung 30 umfasst. Die dritte Linearantriebseinrichtung 30 umfasst wiederum einen dritten Linearaktor 31 und eine dritte Linearachse 32. Die dritte Linearantriebseinrichtung 30, insbesondere der dritte Linearaktor 31, ist drehbar an der nicht dargestellten Halteeinrichtung gelagert, vorzugsweise kardanisch. Dargestellt ist eine erste Drehachse 33 und eine zweite Drehachse 34 der dritten Linearantriebseinrichtung 30, wobei die dritte Linearantriebseinrichtung 30 drehbar um diese Drehachsen 33, 34 an der Halteeinrichtung gelagert ist. Die Drehachsen 33, 34 sind hierbei vorzugsweise rechtwinklig zueinander orientiert. Ebenfalls sind die Drehachsen rechtwinklig zu einer Trajektorie der Linearbewegung der dritten Linearachse 32 angeordnet. Die Vorrichtung 1, insbesondere der Werkstückträger 3, umfasst ein weiteres Kugellager 9, wobei ein werkstückträgerseitiges Ende der dritten Linearachse 32 über dieses weitere Kugellager 9 an dem Werkstückträger 3 befestigt ist.

Über eine Linearbewegung der drei Linearachsen 12, 22, 32 kann sowohl ein Arbeitsabstand des Werkstückträgers 3, insbesondere der Auflagefläche 4 des Werkstückträgers 3 und somit eines auf dieser Auflagefläche 4 aufliegenden Dokumentenkörpers 2 von der Beschriftungseinrichtung 200 eingestellt werden. Weiter kann auch eine Orientierung der Auflagefläche 4 relativ zur Beschriftungseinrichtung 200 eingestellt werden. Dies wiederum ermöglicht in vorteilhafter Weise, einen Einfallswinkel eines von der Beschriftungseinrichtung 200 erzeugten Laserstrahls auf die Auflagefläche 4 bzw. auf den Dokumentenkörper 2 einzustellen. Die Linearachsen 12, 22, 32 sind hierbei unabhängig voneinander bewegbar.

Weiter ist im Unterschied zu der in Fig. 2 dargestellten Ausführungsform die erste Linearantriebseinrichtung 10 nicht drehbar, sondern ortsfest an der Halteeinrichtung und somit relativ zur Befestigungseinrichtung angeordnet. Die zweite Linearantriebseinrichtung 20 und die dritte Linearantriebseinrichtung 30 sind hierbei ebenfalls ortsfest, aber, wie vorhergehend erläutert, drehbar relativ zur Beschriftungseinrichtung angeordnet. Als weiterer Unterschied zu der in Fig. 2 dargestellten Ausführungsform ist die zweite Linearantriebseinrichtung 20 allerdings nicht mehr kardanisch, sondern nur um eine einzige Drehachse 23, also die erste Drehachse 23, drehbar relativ zur Beschriftungseinrichtung gelagert.

Sind die Linearantriebseinrichtungen 10, 20, 30 drehbar an der Halteeinrichtung gelagert und befinden sich eine Linearachse 11, 21, 31 einer Linearantriebseinrichtung in einer Lage, in der die Linearachse 11, 21, 31 parallel zur Vertikalrichtung orientiert ist, so kann eine erste der Drehachse 14, 24, 34, über die die jeweilige Linearantriebseinrichtungen 10, 20, 30 an der Halteeinrichtung gelagert ist, parallel zur Längsachse x orientiert sein. Eine weitere Drehachse 13, 23, 33, über die die jeweilige Linearantriebseinrichtungen 10, 20, 30 an der Halteeinrichtung gelagert ist, kann jeweils parallel zur Querachse y orientiert sein.

Durch die in Fig. 3 dargestellte Ausführungsform kann ein Arbeitsabstand zwischen dem Werkstückträger 3 und der Beschriftungseinrichtung sowie der Einfallswinkel des Laserstrahls auf die Auflagefläche 4 eingestellt werden.

In Fig. 3 ist hierbei ein Arbeitsabstand durch einen Pfeil 210 dargestellt.

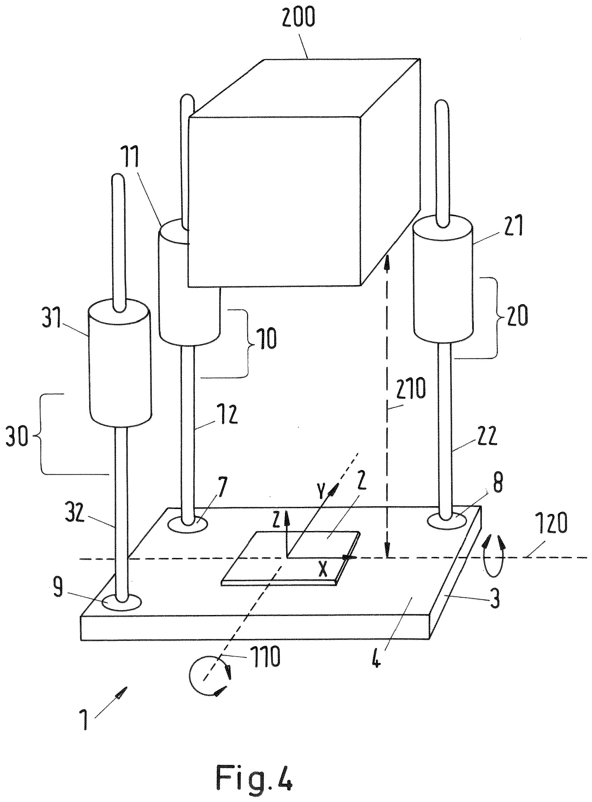

Fig. 4 zeigt eine schematische perspektivische Ansicht einer erfindungsgemäßen Vorrichtung 1 in einer weiteren Ausführungsform.

Die in Fig. 4 dargestellte Ausführungsform der erfindungsgemäßen Vorrichtung 1 ist hierbei im Wesentlichen wie die in Fig. 3 dargestellte Ausführungsform ausgebildet. Daher kann auf die Erläuterung zu Fig. 3 verwiesen werden. Im Unterschied zu der in Fig. 3 dargestellten Ausführungsform sind hierbei alle drei Linearantriebseinrichtungen 10, 20, 30 ortsfest und nicht drehbar relativ zur Beschriftungseinrichtung 200 angeordnet, insbesondere ortsfest und nicht drehbar an einer nicht dargestellten Halteeinrichtung gelagert. Durch eine Linearbewegung der drei Linearachsen 12, 22, 32 kann ein Arbeitsabstand entlang einer Vertikalrichtung z, also ein Abstand zwischen der Beschriftungseinrichtung 200 und der Auflagefläche 4 des Werkstückträgers 3 und somit eines Dokumentenkörpers 2, eingestellt werden. Als weiterer Unterschied zu der in Fig. 3 dargestellten Ausführungsform ist das Kugellager 8, welches das werkstückträgerseitige Ende der zweiten Linearachse 22 mit dem Werkstückträger 3 verbindet, linear beweglich am Werkstückträger 3 gelagert. Die Linearbewegung kann hierbei insbesondere von einem Mittelpunkt des Kugellagers 8 zum Mittelpunkt des Kugellagers 7, welches das werkstückträgerseitige Ende der ersten Linearachse 12 mit dem Werkstückträger 3 verbindet, orientiert sein. Als weiterer Unterschied ist das Kugellager 9, welches das werkstückträgerseitige Ende der dritten Linearachse 32 mit dem Werkstückträger 3 verbindet, in beliebige Richtungen bewegbar an dem Werkstückträger 3 gelagert.

Als Linearaktoren in den in Fig. 1, Fig. 2, Fig. 3 und Fig. 4 dargestellten Ausführungsformen können beispielsweise Spindelmotoren, piezobetriebene Aktoren, wie z.B. Inchworm-Motoren, oder sogenannte Piezoleg-Aktoren eingesetzt werden.

### Bezugszeichenliste

- 1: Vorrichtung
- 2: Dokumentenkörper
- 3: Werkstückträger
- 4: Auflagefläche
- 5: Kugellager
- 6a: erstes Festlager
- 6b: zweites Festlager
- 7: Kugellager
- 8: Kugellager
- 9: Kugellager
- 10: erste Linearantriebseinrichtung
- 11: erster Linearaktor
- 12: erste Linearachse
- 13: erste Drehachse der ersten Linearantriebseinrichtung
- 14: zweite Drehachse der ersten Linearantriebseinrichtung
- 20: zweite Linearantriebseinrichtung
- 21: zweiter Linearaktor
- 23: erste Drehachse der zweiten Linearantriebseinrichtung
- 24: zweite Drehachse der zweiten Linearantriebseinrichtung
- 30: dritte Linearantriebseinrichtung
- 31: dritter Linearaktor
- 32: dritte Linearachse
- 33: erste Drehachse der dritten Linearantriebseinrichtung
- 34: zweite Drehachse der dritten Linearantriebseinrichtung
- 110: erste Drehachse des Werkstückträgers
- 120: zweite Drehachse des Werkstückträgers
- 200: Beschriftungseinrichtung
- 210: Abstandsachse

## Patentansprüche

1. Vorrichtung zur Herstellung eines Dokumentenkörpers (2), wobei die Vorrichtung eine Vorrichtung (1) zur Positionierung eines Dokumentenkörpers (2) und mindestens eine Einrichtung (200) zur Bereitstellung eines Laserstrahls umfasst, wobei die Vorrichtung (1) eine Halteeinrichtung und mindestens ein Auflageelement (4) für den Dokumentenkörper (2) umfasst,
**dadurch gekennzeichnet, dass**
die Vorrichtung mindestens eine Linearantriebseinrichtung (10) umfasst, wobei die mindestens eine Linearantriebseinrichtung (10) an der Halteeinrichtung gelagert ist, wobei ein linear bewegliches Abtriebselement (12) der Linearantriebseinrichtung (10) über eine Drehlagereinrichtung (7) mit dem Auflageelement verbunden ist, wobei das Auflageelement (3) über eine weitere Drehlagereinrichtung (5) an der Halteeinrichtung gelagert oder über die weitere Drehlagereinrichtung (8, 9) mit einem linear beweglichen Abtriebselement (22, 32) einer weiteren Linearantriebseinrichtung (20, 30) verbunden ist,
wobei die Vorrichtung (1) genau eine Linearantriebseinrichtung (10) umfasst, wobei das Auflageelement (3) über die weitere Drehlagereinrichtung (5) an der Halteeinrichtung gelagert ist, wobei das Auflageelement (3) zusätzlich über mindestens eine Radiallagereinrichtung (6a, 6b) gelagert ist oder
wobei die Vorrichtung (1) genau zwei Linearantriebseinrichtung (10, 20) umfasst, wobei die Linearantriebseinrichtungen (10, 20) an der Halteeinrichtung gelagert sind, wobei linear bewegliche Abtriebselemente (12, 22) der Linearantriebseinrichtungen (10, 20) jeweils über eine Drehlagereinrichtung (7, 8) mit dem Auflageelement (3) verbunden sind oder
wobei die Vorrichtung (1) eine erste, eine zweite und eine dritte Linearantriebseinrichtung (10, 20, 30) umfasst, wobei die Linearantriebseinrichtungen (10, 20, 30) an der Halteeinrichtung gelagert sind, wobei linear bewegliche Abtriebselemente (12, 22, 32) der Linearantriebseinrichtungen (10, 20, 30) jeweils über eine Drehlagereinrichtung (7, 8, 9) mit dem Auflageelement (3) verbunden sind, wobei die Linearantriebseinrichtungen (10, 20, 30) jeweils starr an der Halteeinrichtung gelagert sind, wobei eine Drehlagereinrichtung (8) linear beweglich an dem Auflageelement (3) und eine weitere Drehlagereinrichtung (9) frei beweglich an dem Auflageelement (3) gelagert ist.

2. Vorrichtung nach Anspruch 1, **dadurch gekennzeichnet, dass** mindestens eine Drehlagereinrichtung (10, 20, 30) um zwei voneinander verschiedene Drehachsen (13, 14, 23, 24, 33, 34) drehbar an der Halteeinrichtung gelagert ist.

3. Vorrichtung nach Anspruch 1, **dadurch gekennzeichnet, dass** die erste und zweite Linearantriebseinrichtung (10, 20) jeweils um zwei voneinander verschiedene Drehachsen (13, 14, 23, 24) drehbar an der Halteeinrichtung gelagert ist.

4. Vorrichtung nach Anspruch 1, **dadurch gekennzeichnet, dass** die erste Linearantriebseinrichtung (10) starr, die zweite Linearantriebseinrichtung (20) um eine Drehachse (23) drehbar und die dritte Linearantriebseinrichtung (30) um zwei voneinander verschiedene Drehachsen (32, 34) drehbar an der Halteeinrichtung gelagert ist.

5. Vorrichtung nach einem der vorangegangenen Ansprüchen, **dadurch gekennzeichnet, dass** Bewegungsrichtungen der Linearantriebseinrichtungen (10, 20, 30) zumindest in einer Ausgangslage des Auflageelements (3) parallel zueinander orientiert sind.

6. Vorrichtung nach einem der vorangegangen Ansprüche, **dadurch gekennzeichnet, dass** die Vorrichtung mindestens eine Einrichtung zur Veränderung einer Fokuslage des Laserstrahls umfasst.

7. Vorrichtung nach Anspruch 6, **dadurch gekennzeichnet, dass** die Einrichtung zur Veränderung der Fokuslage eine Fokussierlinse umfasst.

8. Verfahren zum Betrieb einer Vorrichtung zur Herstellung eines Dokumentenkörpers gemäß einem der Ansprüche 1 bis 7, wobei das linear bewegliche Abtriebselement (11, 21, 31) der mindestens einen Linearantriebseinrichtung (10, 20, 30) derart bewegt wird, dass eine gewünschte Position und/oder Orientierung der Auflagefläche (4) eingestellt wird.

9. Verfahren nach Anspruch 8, **dadurch gekennzeichnet, dass** eine Fokuslage des Laserstrahls verändert wird.

## Claims

1. Device for producing a document body (2), the device comprising a device (1) for positioning a document body (2) and at least one apparatus (200) for providing a laser beam, the device (1) comprising a holding apparatus and at least one support element (4) for the document body (2), **characterized in that**
the device comprises at least one linear-drive apparatus (10), the at least one linear-drive apparatus (10) being mounted on the holding apparatus, a linearly movable drive element (12) of the linear-drive apparatus (10) being connected to the support element via a rotary-bearing apparatus (7), the support element (3) being mounted on the holding apparatus via a further rotary-bearing apparatus (5) or being connected to a linearly movable drive element (22, 32) of a further linear-drive apparatus (20, 30) via the further rotary-bearing apparatus (8, 9),
the device (1) comprising exactly one linear-drive apparatus (10), the support element (3) being mounted on the holding apparatus via the further rotary-bearing apparatus (5), the support element (3) additionally being mounted via at least one radial-bearing apparatus (6a, 6b), or
the device (1) comprising exactly two linear-drive apparatuses (10, 20), the linear-drive apparatuses (10, 20) being mounted on the holding apparatus, linearly movable drive elements (12, 22) of the linear-drive apparatuses (10, 20) each being connected to the support element (3) via a rotary-bearing apparatus (7, 8) or
the device (1) comprising a first, a second and a third linear-drive apparatus (10, 20, 30), the linear-drive apparatuses (10, 20, 30) being mounted on the holding apparatus, linearly movable drive elements (12, 22, 32) of the linear-drive apparatuses (10, 20, 30) each being connected to the support element (3) via a rotary-bearing apparatus (7, 8, 9), the linear-drive apparatuses (10, 20, 30) each being rigidly mounted on the holding apparatus, a rotary-bearing apparatus (8) being linearly movably mounted on the support element (3) and a further rotary-bearing apparatus (9) being freely movably mounted on the support element (3).

2. Device according to claim 1, **characterized in that** at least one rotary-bearing apparatus (10, 20, 30) is mounted on the holding apparatus so as to be rotatable about two different rotational axes (13, 14, 23, 24, 33, 34).

3. Device according to claim 1, **characterized in that** the first and second linear-drive apparatuses (10, 20) are each mounted on the holding apparatus so as to be rotatable about two different rotational axes (13, 14, 23, 24).

4. Device according to claim 1, **characterized in that** the first linear-drive apparatus (10) is rigidly mounted on the holding apparatus, the second linear-drive apparatus (20) is mounted on the holding apparatus so as to be rotatable about a rotational axis (23), and the third linear-drive apparatus (30) is mounted on the holding apparatus so as to be rotatable about two different rotational axes (32, 34).

5. Device according to any of the preceding claims, **characterized in that** movement directions of the linear-drive apparatuses (10, 20, 30) are oriented in parallel with one another, at least in an initial position of the support element (3).

6. Device according to any of the preceding claims, **characterized in that** the device comprises at least one apparatus for changing a focal pose of the laser beam.

7. Device according to claim 6, **characterized in that** the apparatus for changing the focal pose comprises a focusing lens.

8. Method for operating a device for producing a document body according to any of claims 1 to 7, wherein the linearly movable drive element (11, 21, 31) of the at least one linear-drive apparatus (10, 20, 30) is moved such that a desired position and/or orientation of the support surface (4) is set.

9. Method according to claim 8, **characterized in that** a focal pose of the laser beam is changed.

## Revendications

1. Dispositif de fabrication d'un corps de document (2), dans lequel le dispositif comprend un dispositif (1) pour positionner un corps de document (2) et au moins un système (200) pour fournir un rayon laser, dans lequel le dispositif (1) comprend un système de maintien et au moins un élément de réception (4) pour le corps de document (2), **caractérisé en ce que**
le dispositif comprend au moins un système d'entraînement linéaire (10), dans lequel l'au moins un système d'entraînement linéaire (10) est monté sur le système de maintien, dans lequel un élément de sortie (12) mobile linéairement du système d'entraînement linéaire (10) est relié à l'élément de réception par l'intermédiaire d'un système de palier rotatif (7), dans lequel l'élément de réception (3) est monté sur le système de maintien par l'intermédiaire d'un autre système de palier rotatif (5) ou est relié à un élément de sortie (22, 32) mobile linéairement d'un autre système d'entraînement linéaire (20, 30) par l'intermédiaire de l'autre système de palier rotatif (8, 9),
dans lequel le dispositif (1) comprend précisément un système d'entraînement linéaire (10), dans lequel l'élément de réception (3) est monté sur le système de maintien par l'intermédiaire de l'autre système de palier rotatif (5), dans lequel l'élément de réception (3) est monté en supplément par l'intermédiaire d'au moins un système de palier radial (6a, 6b) ou dans lequel le dispositif (1) comprend précisément deux systèmes d'entraînement linéaire (10, 20), dans lequel les systèmes d'entraînement linéaire (10, 20) sont montés sur le système de maintien, dans lequel des éléments de sortie (12, 22) mobiles linéairement des systèmes d'entraînement linéaire (10, 20) sont reliés à l'élément de réception (3) respectivement par l'intermédiaire d'un système de palier rotatif (7, 8), ou
dans lequel le dispositif (1) comprend un premier, un deuxième et un troisième système d'entraînement linéaire (10, 20, 30), dans lequel les systèmes d'entraînement linéaires (10, 20, 30) sont montés sur le système de maintien,
dans lequel des éléments de sortie (12, 22, 32) mobiles linéairement des systèmes d'entraînement linéaire (10, 20, 30) sont reliés à l'élément de réception (3) respectivement par l'intermédiaire d'un système de palier rotatif (7, 8, 9), dans lequel les systèmes d'entraînement linéaire (10, 20, 30) sont montés respectivement de manière rigide sur le système de maintien, dans lequel un système de palier rotatif (8) est monté de manière mobile linéairement sur l'élément de réception (3) et un autre système de palier rotatif (9) est monté de manière mobile librement sur l'élément de réception (3).

2. Dispositif selon la revendication 1, **caractérisé en ce qu'**au moins un système de palier rotatif (10, 20, 30) est monté sur le système de maintien de manière à pouvoir tourner autour de deux axes de rotation (13, 14, 23, 24, 33, 34) différents l'un de l'autre.

3. Dispositif selon la revendication 1, **caractérisé en ce que** le premier et le deuxième système d'entraînement linéaire (10, 20) sont montés sur le système de maintien de manière à pouvoir tourner autour de deux axes de rotation (13, 14, 23, 24) différents l'un de l'autre.

4. Dispositif selon la revendication 1, **caractérisé en ce que** le premier système d'entraînement linéaire (10) est monté de manière rigide, le deuxième système d'entraînement linéaire (20) est monté de manière à pouvoir tourner autour d'un axe de rotation (23) et le troisième système d'entraînement linéaire (30) est monté sur le système de maintien de manière à pouvoir tourner autour de deux axes de rotation (32, 34) différents l'un de l'autre.

5. Dispositif selon l'une quelconque des revendications précédentes, **caractérisé en ce que** des directions de déplacement des systèmes d'entraînement linéaire (10, 20, 30) sont orientées de manière parallèle les unes par rapport aux autres au moins dans une position de départ de l'élément de réception (3).

6. Dispositif selon l'une quelconque des revendications précédentes, **caractérisé en ce que** le dispositif comprend au moins un système pour modifier une position focale du rayon laser.

7. Dispositif selon la revendication 6, **caractérisé en ce que** le système destiné à modifier la position focale comprend une lentille de focalisation.

8. Procédé pour faire fonctionner un dispositif de fabrication d'un corps de document selon l'une quelconque des revendications 1 à 7, dans lequel l'élément de sortie (11, 21, 31) mobile linéairement de l'au moins un système d'entraînement linéaire (10, 20, 30) est déplacé de telle manière qu'une position et/ou orientation souhaitée de la surface de réception (4) est réglée.

9. Procédé selon la revendication 8, **caractérisé en ce qu'**une position focale du rayon laser est modifiée.
